# EUROPEAN PATENT APPLICATION

(11) **EP 4 137 428 A1**
(43) Date of publication of application: **22.02.2023**
(21) Application number: 22189926.3
(22) Date of filing: 11.08.2022
(51) Int. Cl.: B65G 47/90, B25J 15/08, B65G 61/00

(54) **MECHANICAL JAW EDGE GRIPPER FOR GRIPPING AND MOVING A HORIZONTALLY PLACED FLAT OBJECT**

(30) Priority: 19.08.2021 CZ 20210383; 07.09.2021 CZ 20210413
(71) Applicant: Media CZ s.r.o., 46001 Liberec 1 (CZ)
(72) Inventor: Svoboda, Jan, 468 01 Jablonec nad Nisou (CZ); Novak, Jaroslav, 512 61 Prepere (CZ)
(74) Representative: Sedlák, Jirí

(57) **Abstract**

Mechanical jaw edge gripper for gripping and moving a horizontally placed flat object A gripper for flat objects has been provided with a height from 2 cm and, conversely, a length and width of between 20 and 100 cm, which are in particular stacked one on top of the other. Such objects cannot be picked up from below as they are generally stacked over stacking edges and the only free and accessible walls from one direction are the side wall and the upper wall. The gripper is preferably situated at the end of an arm. For separating several stacks of flat objects next to each other, the grippers are installed next to each other or from several sides of the stack. The gripper grips the flat object over the adjacent top and front lateral walls in their common edge over the corner using jaws. The grip is very shallow, and therefore the jaws are provided with gripping strips at least half the length of the shorter side of the flat objects being gripped, in order to keep the flat object in the jaws, and at most with a length corresponding to the length of the longer side of the flat object.

## Description

### Field of the Invention

Industrial collapsible plastic crates and their handling, in particular their removal from the stack.

### Background of the Invention

Collapsible plastic crates are widely used in food processing and in the industry where they are used for transportation, stocking up or out. The crates are most often used to transport vegetables, fruits, or meat, but they can also be used, for example, in the automotive industry to transport components. The crates are reusable and collapsible, i.e. if the crate is empty, it folds into a flat object with a height of usually up to 5 cm. The crates thus folded are stacked on pallets and transported for further use. Stacks of crates must be taken apart before further use and either folded again, sorted or washed.

Crates stacked on a pallet are now separated and usually sorted manually into individual columns of small crates and large crates, and in addition the crates are sorted according to different manufacturers. The sorted crates are then again manually put onto the conveyor for further processing, or the sorted stacks of crates are separated by machines that are able to separate only one type and one size of crate. There is a machine for processing individual columns of small or large crates, which continuously picks up one top crate from the column and places it on the conveyor, or lifts the entire column of crates and releases only one bottom crate onto the conveyor at a time.

A machine that can process a stack of mixed small and large crates, or even an entire stack of interconnected columns of mixed small and large crates, is disclosed in the Czech patent application PV 2020-701. However, as has been shown in practice, besides the machine, it is no less important to invent the crate gripper itself so that it is universal for any crate, regardless of its size or manufacturer.

The state of the art includes, for example, US9498887B1, which discloses a box clamp that uses two jaws pressed at an angle of 90° to grip two sides of a crate. The grip is realized by means of vacuum suction cups, which only limits it to smooth surfaces.

Document EP3144255B1 discloses a clamping device for beverage packs (six-packs) to unload them from a pallet. The clamping device includes a bottom surface and a safety lock, wherein the surface comes into contact with the longer side of the six-pack, and the safety lock presses the opposite bottle towards the surface. The entire clamping device is then placed surface down, so the six-pack lies on the surface and is held in place by a safety lock. In the opposite way, the six pack is put to a new place of destination.

Document US20200180875A1 discloses a clamping device for boxes, which, like document D1, uses two jaws pressed at an angle of 90° to grip two sides of the box. Unlike document US9498887B1, the grip is realized by pressure, which opens up space for doubts about the functionality of such a solution

Document US3517831A discloses a device for loading and unloading of pallets, which may have different gripping mechanisms according to the goods to be loaded. In particular, it is a grip with vacuum suction cups or grippers, for example for the necks of bottles. The solution according to document US3517831A discloses the removal of the entire layer of goods at once, from above.

### Summary of the Invention

A gripper for flat objects has been provided with a height of preferably from 2 cm and, conversely, a length and width of between 20 and 200 cm, which are in particular stacked one on top of the other. Such objects cannot be picked up from below as they are generally stacked over stacking edges and the only free and accessible walls from one direction are the side wall and the upper wall. The gripper is preferably situated at the end of an arm. For separating several stacks of flat objects next to each other, the grippers are installed next to each other or from several sides of the stack. The gripper grips the flat object over two adjacent sides, namely the upper wall and the front lateral wall in their common edge by means of the jaws. The grip is very shallow, and therefore the jaws are provided with gripping strips at least half the length of the shorter side of the flat objects being gripped, and at most with a length corresponding to the length of the longer side of the flat object, in order to keep the flat object in the jaws.

The gripper therefore has two jaws, a lateral static fixing jaw with a strip and an upper movable pressure jaw with a strip. The lateral static fixing jaw supports the flat object by the vertical lateral side, which is very narrow, during gripping. In contrast, the upper movable pressure jaw approaches the horizontal wall of the flat object obliquely; as soon as the upper movable pressure jaw comes into contact with the horizontal wall of the flat object, the object is tilted, supported, and clamped, whereby it is gripped and can be moved.

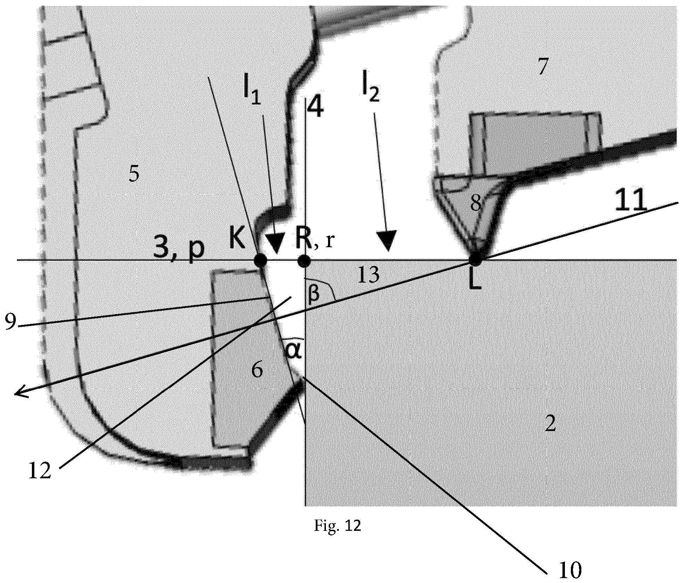

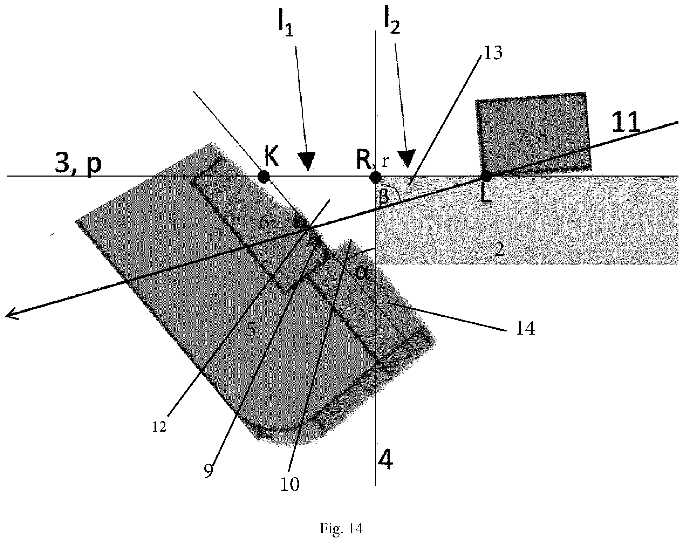

In order to support and tilt the flat object, the surface of the lateral static fixing jaw strip is inclined from the vertical lateral side of the flat object by an angle αof 10 to 45° and passes at the lower edge into a tilting edge over which the flat obj ect is tilted on the contact area of the lateral static fixing jaw strip. When gripping the flat object, the strip of the lateral static fixing jaw in its tilting edge approaches the lateral vertical wall of the flat object, then the upper movable pressure jaw approaches the upper horizontal wall of the flat object at an angle β with its strip; its oblique pressure at the edge of the flat object causes the flat object to swing in its lateral vertical wall over the edge of the tilting strip to the contact surface of the strip of the lateral static fixing jaw, whereby it is inclined and tilted from the stack of flat objects, thanks to which the flat object is well supported and gripped, and in this state, it can be safely picked up from the stack and move to another place. The tilt diagram and pressure angle are shown in Fig. 12 and 14. The inclination of the strip of the lateral static fixing jaw is used here to support the flat body slightly, which shifts the forces and the clamping of the flat body by the jaws does not have to be so strong in a small area of the edge of the whole body, and the flat body can be moved safely. The entire grip preferably takes place on the marginal 10% of the length of the flat body, at most on the marginal 20% of the length of the flat body.

### The process of gripping

The strip of the upper movable pressure jaw moves above the horizontal wall of the flat object to the static fixing jaw in the direction defined by the gripping movement vector *v*^{→} and comes into contact with the horizontal wall of the flat object at a defined distance *l₂* from the edge *r* of the flat object, i.e. its edge, exactly from its lateral vertical wall at point R at a defined angle β. As soon as the strip touches the horizontal wall of the flat object at the edge of the object and presses it by continuing the gripping movement along the vector *v*^{→} at an angle β, the flat object begins to tilt on the inclined strip of the lateral vertical wall of the flat object, thereby partially gripping it from below and fixing it in the grip with both jaws.

When viewed from the side, the entire grip is an interplay of the inclined contact strip of the lateral static fixing jaw, the flat object to be gripped and the strip of the upper movable pressure jaw, wherein these three components forming defined angles between themselves so that the whole system of opening works well and the flat object is drawn towards the lateral static fixing jaw.

The edge of the flat object over which the grip takes place is defined by the lateral vertical wall of the flat object and the horizontal area *p* placed on the upper horizontal wall of the flat object which, in the working position of pressure, intersects the lateral vertical wall of the flat object at the point R of the edge *r* of the flat object, and furthermore, this horizontal area *p* passes through the contact area of the strip of the lateral static fixing jaw at point K. Subsequently, the transport takes place.

The movement vector *v*^{→} together with the horizontal area *p* and the lateral vertical wall of the flat object defines a **pressure triangle** with the side *l₂* and the opposite angle β. The length *l₂* is the distance of the strip of the upper movable pressure jaw on the horizontal area *p* in the working position in the pressure phase at the point L from the point R on the edge *r*, i.e. from the edge of the flat object, wherein the length *l₂* decreases during the oblique movement of the strip of the upper movable pressure jaw towards the static fixing jaw up to the working position of the grip. The inclined contact strip of the lateral static fixing jaw together with the horizontal area *p* and the lateral vertical wall of the flat object define a **tilting triangle** with the side l₁ and the opposite angle α, wherein the side l₁ passing through the horizontal area *p*.

Necessary and essential parameters for a good and firm grip are the mutual proportions of the tilting and pressure triangles, where the lengths *l₁* ≤ *l₂*, wherein the length *l₂* being at most 1/6 of the horizontal length of the flat object, preferably *l₂* is at most 1/10 of the horizontal length of the flat object, in the working position of the grip, the angles α and β are about mutual proportions α ≤ β ≤ 85°,α = 10 to 45° and α + β ≤ 130°.

The gripper always approaches the stack of flat bodies at the level of the top flat body with the strip of the lateral static fixing jaw towards the lateral vertical wall of the flat object, on which it rests. Subsequently, there is movement and pressure by the strip of the upper movable pressure jaw, which moves along the vector at an angle β to the vertical lateral wall of the flat body towards the lateral fixing jaw.

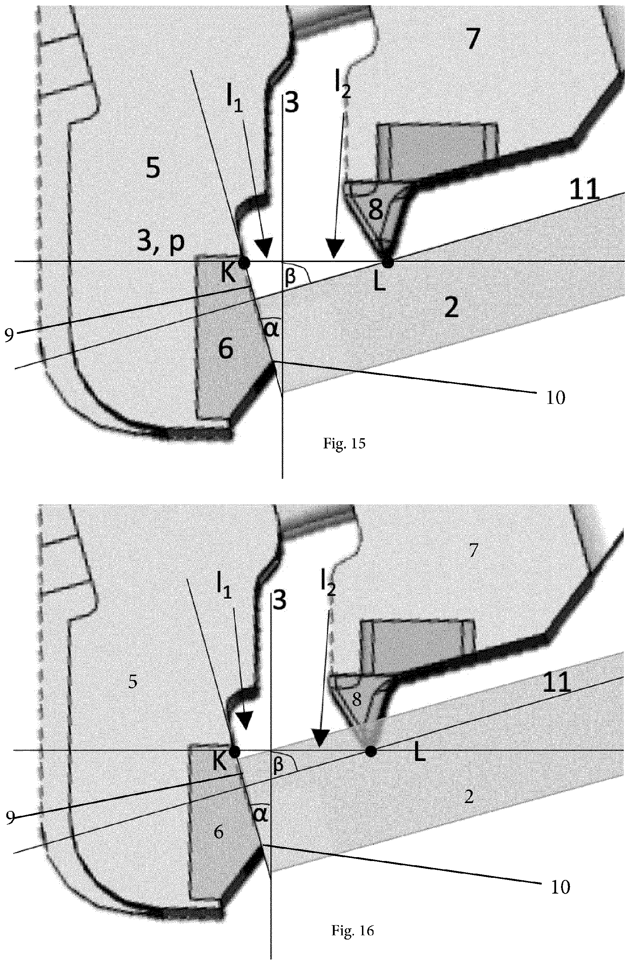

The whole gripping process consists in resting the lateral vertical wall of the flat object on the tilting edge of the strip of the lateral static fixing jaw and tilting it over the edge onto the contact area of the strip of the lateral static fixing jaw and simultaneously attaching it with the upper movable pressure jaw, as shown in Fig. 15 and 16.

If the set parameters of the pressure and tilting triangles are not observed, the flat object will not be firmly gripped or will not be gripped at all. Either the angles α and β will be too small and the flat object will slide down the edge *r*, or if the pressure of the strip of the upper movable pressure jaw is too far from the edge *r*, the flat object will tilt but in the opposite direction than necessary. Once it deviates from its original position, it can no longer be picked up by machine.

The strip of the upper movable pressure jaw moves to the upper horizontal wall of the flat object by the movement vector *v*^{→} at an angle β, wherein α ≤ β ≤ 85°.

Preferably, the strips of the lateral fixing jaw and/or the upper movable pressure jaw are provided with an anti-slip finish.

The anti-slip finish is preferably made by roughening the surface of the strips by means of grooves or scratches or by providing a flexible or soft coating, or the strips are made of flexible materials such as plastics or rubbers.

Furthermore, the strip of the upper movable pressure jaw is preferably provided with a bevel, for immersion in perforations or recesses of a flat object during the gripping movement.

Preferably, the static fixing jaw is connected to the movable pressure jaw by a guide body, which may be a shaft or a rail, wherein the guide body guides the movement of the movable pressure jaw and thus represents the movement vector of the pressure jaw.

### A DIAGRAM of the whole gripping process when viewed from the side

### Pressure, Fig. 12 and 14

The strip of the upper movable pressure jaw moves above the horizontal wall of the flat object to the static fixing jaw in the direction defined by the gripping movement vector *v*^{→} and comes into contact with the horizontal wall of the flat object at the point L, a defined distance *l₂* from the point R on the edge *r* of the flat object, i.e. the strip of the movable pressure jaw makes contact with the horizontal wall of the flat object at a distance *l₂* from the edge of the flat object.

### Grip, Fig. 15 and 16

After contact with the horizontal wall of the flat object, the strip continues to move obliquely along the vector *v*^{→} at an angle β, presses the flat object and the flat object begins to tilt on the inclined strip of the lateral vertical wall of the flat object until it reaches tilting at the angle α; by the lateral wall the flat object rests on the contact area of the strip, thus the edge *r* is placed on the contact area of the strip, the upper surface of the flat body is inclined from the horizontal plane *p*, thereby partially gripping it from below and fixing it in the grip with both jaws. The point L moves along the horizontal line towards the static fixing jaw.

### Summary:

The mechanical jaw edge gripper is used to grip and move a horizontally placed flat object over its edge formed by an adjacent upper horizontal wall and a lateral vertical wall, which together form an angle of 90° ± 5°, in particular boards and folded plastic crates.

The mechanical jaw edge gripper has a lateral static fixing jaw with a strip having a length of at least half the shorter side of the flat object and a maximum length corresponding to the length of the longer side of the flat object and an upper movable pressure jaw with a strip having a length of at least half the shorter side of the flat object and a maximum length corresponding to the length of the longer side of the flat object, wherein the upper pressure jaw can obliquely move along the movement vector at an angle β to the lateral static fixing jaw, and the strip of the lateral static fixing jaw is provided with a contact area (9) to support the flat object by its lateral vertical wall, and the contact area of the strip is inclined at an angle α and at the bottom it passes into a tilting edge for inclining the flat body.

The contact area of the strip of the lateral static fixing jaw with the horizontal area *p* situated on the top horizontal wall of the flat object, with the movement vector of the upper movable pressure jaw and with the lateral vertical wall of the flat object when viewed from the side form two right-angled triangles, a tilting triangle defined by the angle α and a pressure triangle defined by the angle β.

The tilting triangle is defined by the contact area of the strip of the lateral static fixing jaw, the vertical lateral wall of the flat body and the horizontal area *p*, wherein the contact area of the strip of the lateral static fixing jaw forms an angle α with the vertical lateral wall of the flat body above the opposite side *l₁*. The side *l₁* is formed by a line segment KR, wherein the vertex R of the right angle of the tilting triangle lies above the hypotenuse of the tilting triangle and at the same time at the edge *r* of the flat object and the vertex K lies at the intersection of the contact area of the strip of the lateral static fixing jaw and the horizontal area *p*.

The pressure triangle is defined by a movement vector of the upper movable pressure jaw, a vertical lateral wall of the flat body and a horizontal area *p*, wherein the movement vector *v*^{→} of the upper movable pressure jaw forms an angle β with the vertical lateral wall of the flat body above the opposite side *l₂* formed by the line segment RL, wherein the vertex L is formed by the intersection of the horizontal area *p* and the movement vector *v*^{→} of the upper movable pressure jaw passing through the strip of the upper movable pressure jaw.

The side *l₂* of the pressure triangle is greater than or equal to the side *l₁*, i.e. *l₁* ≤ *l*_{*2*,} and the side*l₂* (l₂) is 1 to 10 cm. The angle α is 10 to 45°, i.e.: α = 10 to 45°. The angle β is equal to or greater than the angle α and less than 85°, i.e. α ≤ β ≤ 85°. The sum of angles (α) and (β) is less than or equal to 130°, i.e. α + β ≤ 130°.

Preferably, the lateral static fixing jaw and/or the upper movable pressure jaw and their strips have the same length.

Preferably, the length of the lateral static fixing jaw and/or its strip is 10 to 30 cm.

Preferably, the length of the upper movable pressure jaw and/or its strip is 10 to 30 cm.

Preferably, the strip of the lateral static fixing jaw and the strip of the upper movable pressure jaw have the same length.

Preferably, the contact area of the lateral static fixing jaw strip is provided with protrusions or grooves.

Preferably, the tilting edge is horizontal along its entire length.

Preferably, the tilting edge is situated in a tilting block, which is steppedly mounted on the lateral static fixing jaw behind the strip and steppedly passes into the contact area.

Alternatively, the tilting edge is preferably formed by the edge of the contact area of the strip of the lateral static fixing jaw.

### Explanation of Drawings

Fig. 1. Jaw gripper, side view
Fig. 2. Jaw gripper, bottom side view

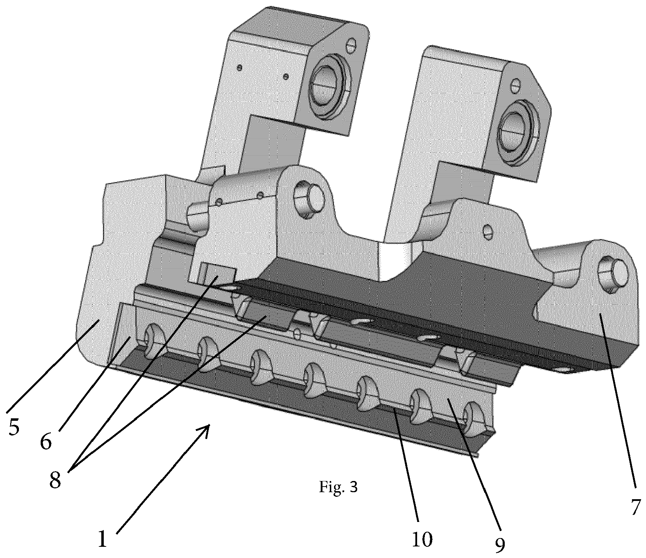

Fig. 3. Jaw gripper, front side view

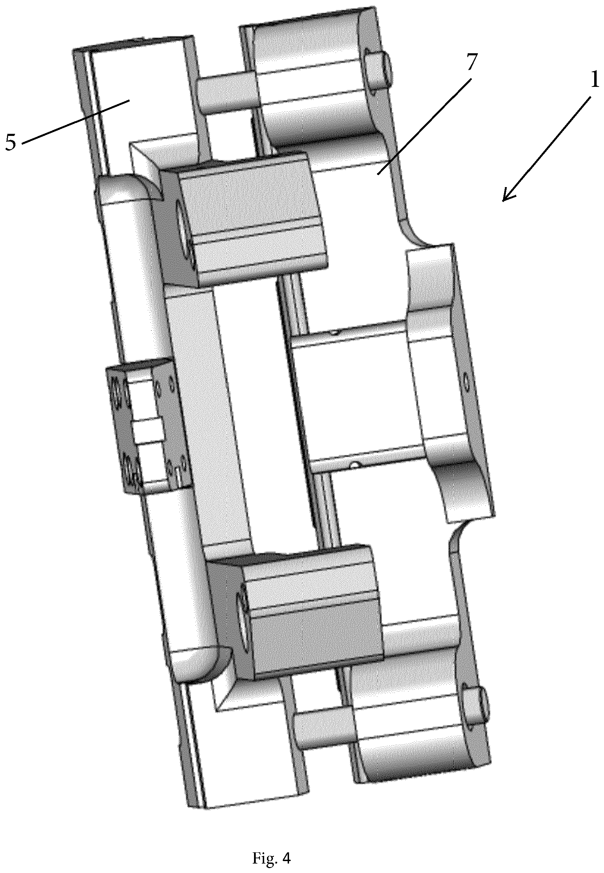

Fig. 4. Jaw gripper, top view

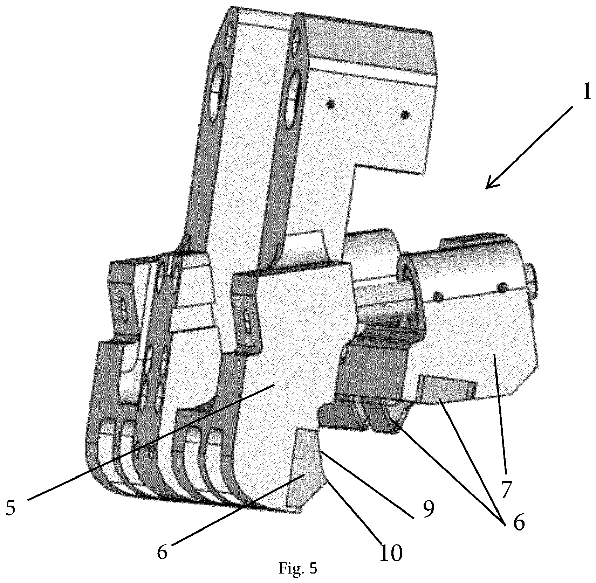

Fig. 5. Jaw gripper, rear side view

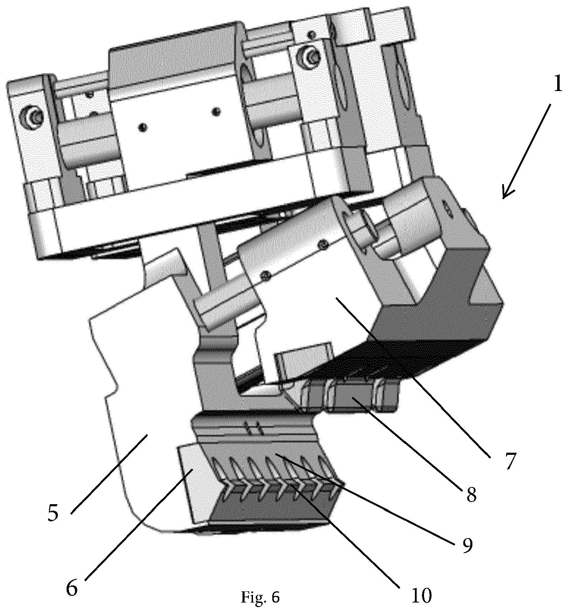

Fig. 6. Jaw gripper, front side view, including connection

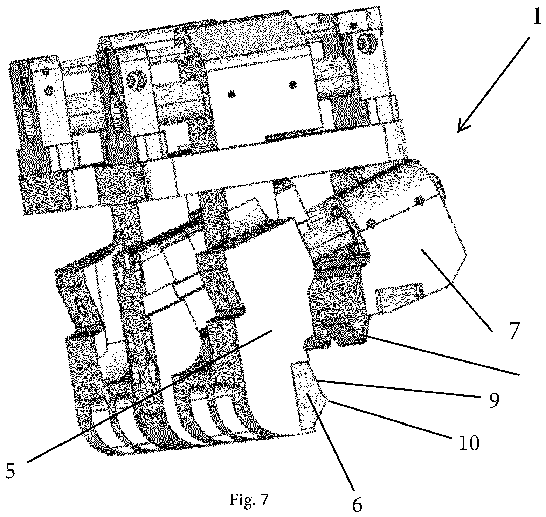

Fig. 7. Jaw gripper, rear side view, including connection

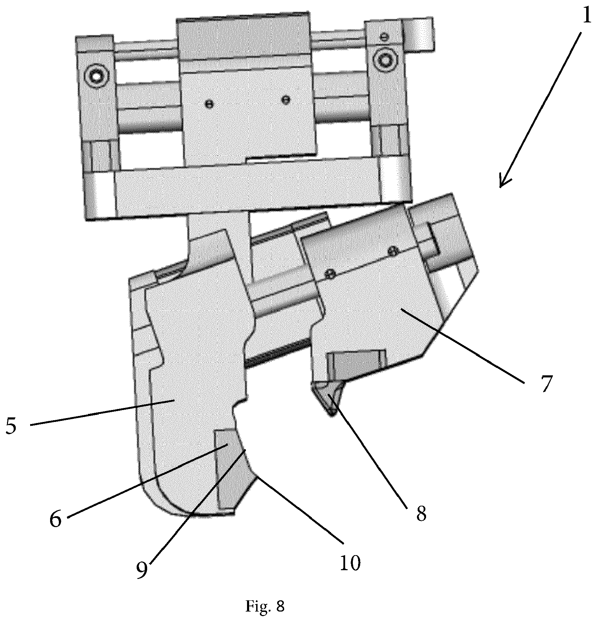

Fig. 8. Jaw gripper, side view, including connection

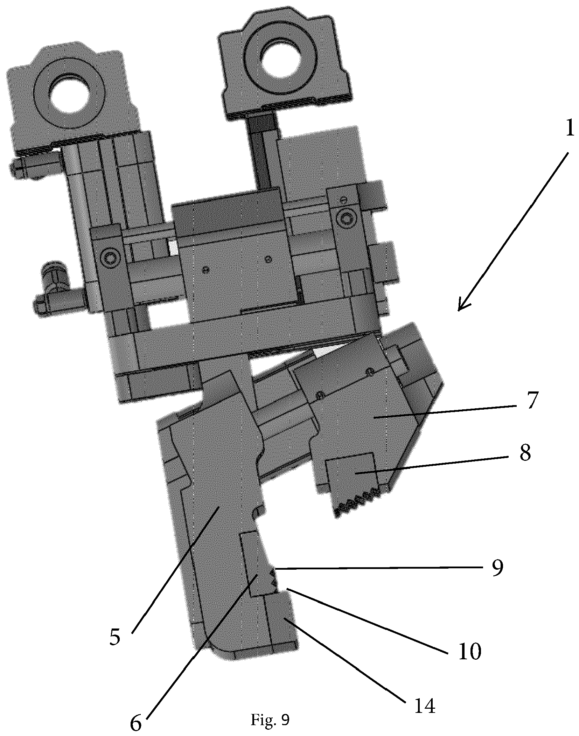

Fig. 9. Jaw gripper, side view, including connection

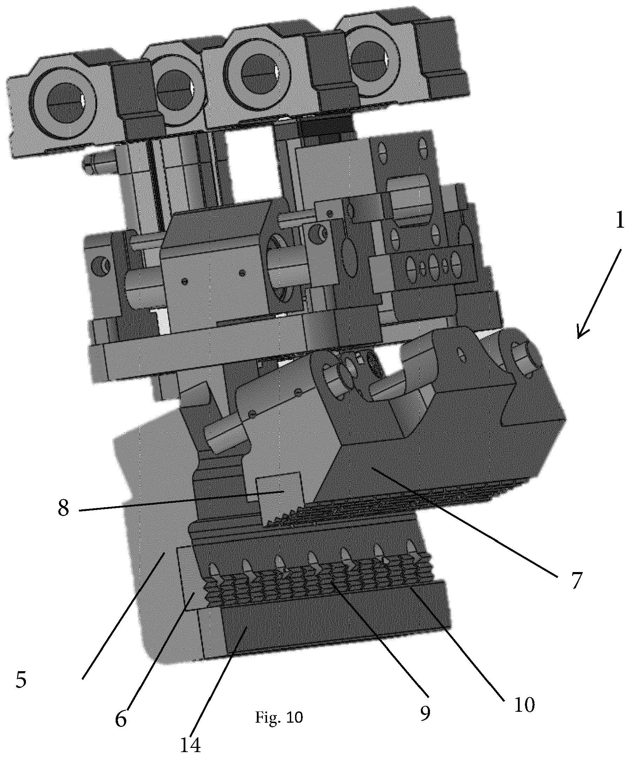

Fig. 10. Jaw gripper, front side view, including connection

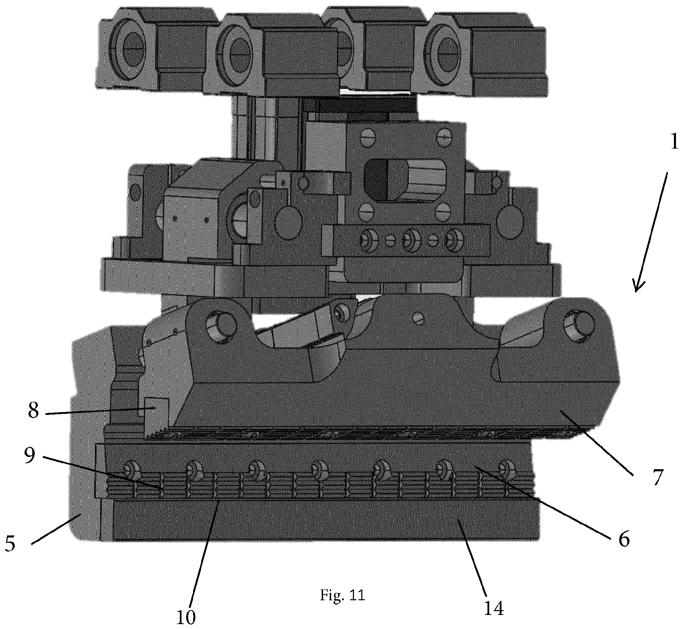

Fig. 11. Jaw gripper, front view, including connection
Fig. 12. Tilting and pressure triangles set between the jaws of the gripper according to Example 1

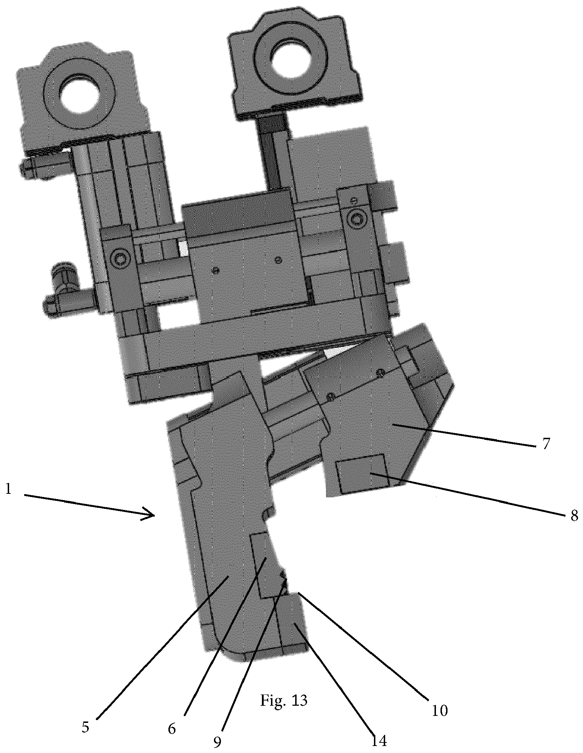

Fig. 13. Jaw gripper, smooth pressure jaw, side view, including connection
Fig. 14. Tilting and pressure triangles set between the jaws of the gripper according to Example 2
Fig. 15. Jaw gripper, side view, movement of the pressure jaw along the movement vector towards the static jaw, contact of the strip of the pressure jaw with a flat object - a board
Fig. 16. Jaw gripper, side view, movement of the pressure jaw along the movement vector towards the static jaw, insertion of the beak of the strip of the pressure jaw into perforations in a flat object - a folded crate

### Exemplary Embodiments of the Invention

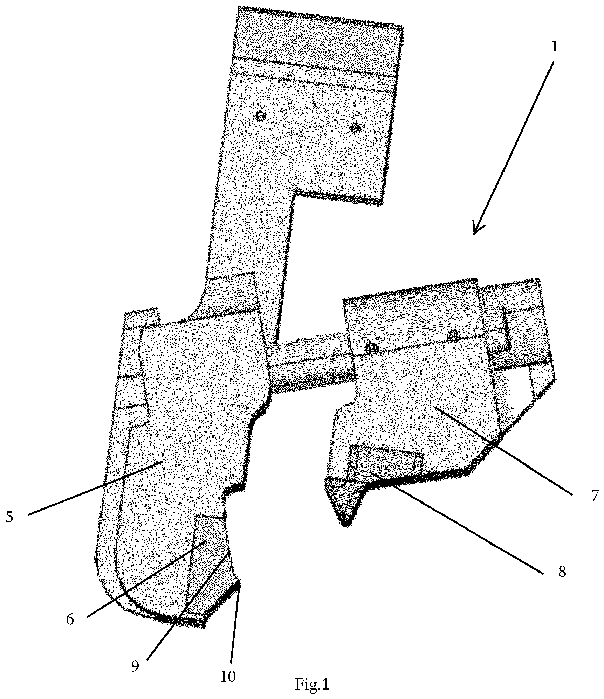

### Example 1 - folded crate, α = 15°, β = 75°, Fig. 1

The mechanical jaw edge gripper 1 shown in Fig. 1 has a lateral static fixing jaw 5 with a length of 25 cm, with a strip 6 with a length of 25 cm. The strip 6 is made of one piece of steel with the fixing jaw 5. The strip 6 has a contact area 9 oriented at an inclination α = 15° to the vertical line, 2 cm wide and provided with 1 mm deep longitudinal grooves spaced 2 mm apart. The contact area 9 on its bottom side passes into the tilting edge 10 of the strip 6. The lateral static fixing jaw 5 is fitted above the strip 6 with two parallel shafts which, when viewed from above, are perpendicular to the contact area 9 of the static fixing jaw. The longitudinal axes of the shafts form an angle α + β = 90° with the contact area 9 and represent the direction of the movement vector of the movable pressure jaw. The inclination of the movement vector with respect to the lateral vertical plane 4 of the flat body is β = 75°. On the shafts, the upper movable pressure jaw 7 with a length of 25 cm is mounted, which is driven by a piston and also has a strip 8 with a length of 25 cm, wherein both the pressure jaw 7 and the strip 8 are made of one piece of steel. Since this particular gripper 1 is designed for gripping folded plastic crates, which have different profiles, the strip 8 has attachment beaks whose contact area is parallel to the contact area 9 of the strip 6 of the fixing jaw 5. The gripper 1 is shown in Fig. 1.

The gripper 1 has two positions, between which it passes: the rest position, when the nearest edges of the strip 6 of the fixing jaw 5 and the strip 8 of the pressure jaw 7 are 3 cm apart, and the entire gripper 1 is brought close to the last layer of stacked crates 2, when the tilting edge 10 of the strip 6 of the fixing jaw 5 touches the lateral vertical wall of the crate 2, or copies the vertical plane 4, and the pressure jaw 7 is situated above the top horizontal wall of the crate 2. Then the gripper 1 moves to the working position, when the pressure jaw 7 moves by means of a piston along the shafts towards the fixing jaw 5 and during its travel it hits the top horizontal wall of the crate, into the profile of which the pressure jaw 7 inserts with its attachment beaks. As the pressure jaw 7 presses the crate 2, the crate 2 tilts over the tilting edge 10 and the crate 2 is pushed against the contact area 9 of the strip 6 of the fixing jaw 5. In the working position, the shortest distance between the strip 6 of the fixing jaw 5 and the strip 8 of the pressure jaw 7 is 1.5 cm. At that moment, the crate 2 is firmly clamped in the jaws and its free edge is tilted upward, thereby picking up the crate 2 and reducing the lever acting on the crate 2, and the gripper 1 holding the crate 2 can move.

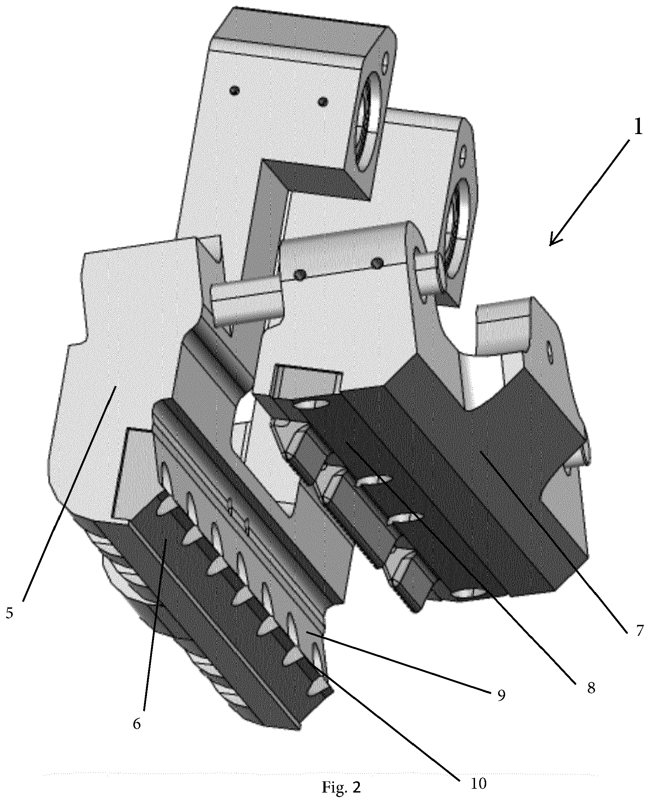

### Example 2 - board, α = 45°, β = 79°, Fig. 2

The mechanical jaw edge gripper 1 has a lateral static fixing jaw 5 having a length of 10 cm, with a strip 6 having a length of 10 cm. The fixing jaw 5 is made of one piece of steel, the strip 6 is made of rubber, it is glued to the fixing jaw 5 and secured with screws. The strip 6 has a contact area 9 oriented at an inclination α = 45° to the vertical line, 3 cm wide and provided with 1 mm high longitudinal projections spaced 1 mm apart. The contact area 9 is provided on its bottom side with a stepped tilting block 14, which has a tilting edge 10 of the strip 6. The lateral static fixing jaw 5 is fitted above the strip 6 with two parallel rails which, when viewed from above, are perpendicular to the contact area 9 of the static fixing jaw 5. The longitudinal axes of the rails form an angle α + β = 129° with the contact area 9 and represent the direction of the movement vector of the movable pressure jaw. The inclination of the movement vector with respect to the lateral vertical plane 4 of the flat body is β = 79°. On the rails, the upper movable pressure jaw 7 with a length of 25 cm is mounted, which is driven by a motor and also has a strip 8 with a length of 10 cm, wherein the pressure jaw 7 is made of steel and the strip 8 is made of plastics. Since this particular gripper 1 is intended for gripping wooden boards 120 cm wide and 80 cm long, the surface of which is more or less smooth, the strip 8 is also smooth and rubberized, and its contact surface forms an angle of 80° with the contact area 9 of the strip 6 of the fixing jaw 5. Such a gripper 1 is shown in Fig. 14.

The gripper 1 has two positions, between which it passes: the rest position, when the nearest edges of the strip 6 of the fixing jaw 5 and the strip 8 of the pressure jaw 7 are 5 cm apart, and the four grippers 1 placed on one control arm in one horizontal line are brought close from the wider side to the last layer of stacked wooden boards, when the tilting edges 10 of the strip 6 of the fixing jaw 5 of all four grippers 1 touch the lateral vertical wall of the top board, or copy the vertical plane 4, and the pressure jaws 7 of all four grippers 1 are situated above the top horizontal wall of the board. Then the grippers 1 move to the working position, when the pressure jaws 7 move by means of motors along the rails towards the fixing jaws 5 and during their travel they hit the top horizontal wall of the board, whereby the horizontal plane 3 rests on the top wall of the board, on which the pressure jaws 7 are pressed with their contact areas. As the pressure jaws 7 press on the board, the board is tilted over the tilting edges 10 and pressed against the contact areas 9 of the strips 6 of the fixing jaws 5. In the working position, the shortest distance between the strip 6 of the fixing jaw 5 and the strip 8 of the pressure jaw 7 is 3 cm. At that moment, the board is firmly clamped in the jaws and its free edge is tilted upward, thereby picking up the board and reducing the lever acting on the board, and the grippers 1 holding the board can move on the arm.

### Reference Signs List

1. Gripper
2. Flat object
3. Horizontal plane of the upper movable pressure jaw 7
4. Vertical plane of the lateral static fixing jaw 5
5. Lateral static fixing jaw
6. Strip of the lateral static fixing jaw 5
7. Upper movable pressure jaw
8. Strip of the upper movable pressure jaw 7
9. Contact area of the strip 6 of the lateral static fixing jaw 5
10. Tilting edge of the strip 6
11. Plane of the movement vector of the upper movable pressure jaw 7
12. Tilting triangle
13. Pressure triangle
14. Tilting block

p Horizontal plane
α the angle formed by the contact area 9 of the strip 6 of the lateral static fixing jaw 5 with the vertical plane of the lateral static fixing jaw 5
*r* the edge between the horizontal plane 3 of the upper movable pressure jaw 7 and the vertical plane 4 of the lateral static fixing jaw 5
R the vertex above the hypotenuse of the tilting triangle 12 and the point lying on the edge *r*
K the vertex at the intersection of the contact area 9 of the strip 6 of the lateral static fixing jaw 5 and the horizontal plane p
L the vertex at the intersection of the horizontal area p and the vector 11 of the movement of the upper movable pressure jaw 7
β the angle formed by vector 11 of the movement of the upper movable pressure jaw 7 with the vertical plane 4 of the lateral static fixing jaw 5l₁ the side above the angle α on the tilting triangle 12, formed by the line segment KR
l₂ the side above the angle β on the pressure triangle 13, formed by the line segment RL

### Industrial Applicability

Separating a stack of flat objects, especially boards and folded plastic crates

## Claims

1. A mechanical jaw edge gripper (1) for gripping and moving a horizontally placed flat object (2), such as boards and folded plastic crates, over its edge formed by the adjacent top horizontal wall and lateral vertical wall forming an angle of 90° ± 5°, **characterized in that** the gripper (1) has a lateral static fixing jaw (5) with a strip (6) having a length of at least half a shorter side of the flat object (2) and a maximum length corresponding to a length of a longer side of the flat object (2) and an upper movable pressure jaw (7) with a strip (8) having a length of at least half the shorter side of the flat object (2) and a maximum length corresponding to the length of the longer side of the flat object (2), wherein the upper pressure jaw (7) being obliquely moveable along a plane (11) of a movement vector at an angle (β) to the lateral static fixing jaw (5), and the strip (6) of the lateral static fixing jaw (5) is provided with a contact area (9) to support the flat object (2) by its lateral vertical wall, and the contact area (9) of the strip (6) is inclined at an angle (α) and at the bottom it passes into a tilting edge (10) for inclining the flat object (2), wherein the contact area (9) of the strip (6) of the lateral static fixing jaw (5) with a horizontal plane (p) of the upper movable pressure jaw (7), situated on a top horizontal wall (3) of the flat object (2), with the plane (11) of the movement vector of the upper movable pressure jaw (7) and with a vertical plane (4) of the lateral static fixing jaw (5) when viewed from a side form two right-angled triangles, a tilting triangle (12) defined by the angle (α) and a pressure triangle (13) defined by an angle (β),
the tilting triangle (12) is defined by the contact area (9) of the strip (6) of the lateral static fixing jaw (5), the vertical plane (4) of the lateral static fixing jaw (5) and the horizontal plane (3) of the upper movable pressure jaw (7), wherein the contact area (9) of the strip (6) of the lateral static fixing jaw (5) with the vertical plane (4) of the lateral static fixing jaw (5) form the angle (α), above an opposite side (l₁), wherein the side (l₁) is formed by a segment line from a vertex point (K) to a vertex point (R), wherein the vertex point (R) of a right angle of the tilting triangle (12) lies above the hypotenuse of the tilting triangle (12) and at the same time, on an edge (r) between the horizontal plane (3) the upper movable pressure jaw (7) and the vertical plane (4) of the lateral static fixing jaw (5), and the vertex point (K) lies at an intersection of the contact area (9) of the strip (6) of the lateral static fixing jaw (5) and the horizontal plane (3) of the upper movable pressure jaw (7),
the pressure triangle (13) is defined by the plane (11) of the movement vector of the upper movable pressure jaw (7), the vertical plane (4) of the lateral static fixing jaw (5) and the horizontal plane (3) of the upper movable pressure jaw (7), wherein the plane (11) of the movement vector of the upper movable pressure jaw (7) with the vertical plane (4) of the lateral static fixing jaw form the angle (β) above an opposite side (l₂) formed by a segment line from the vertex point (R) to a vertex point (L), wherein the vertex point (L) is formed by an intersection of the horizontal plane (3) of the upper movable pressure jaw (7) and the plane (11) of the movement vector of the upper movable pressure jaw (7), which passes through a strip (8) of the upper movable pressure jaw (7),
wherein the side (l₂) is greater than or equal to the side (l₁), i.e. *l₁* ≤ *l₂*
the side (l₂) is 1 to 10 cm, i.e. *l₂* = *1 to 10 cm,*
the angle (α) is 10 to 45°, i.e.: *α = 10 to 45°.*
The angle (β) is equal to or greater than angle (α) and less than 85°, *i.e. α ≤ β ≤ 85°.*
a sum of angles (α) and (β) is less than 130°, i.e. *α* + *β ≤ 130°.*

2. The mechanical jaw edge gripper (1) according to claim 1, **characterized in that** the contact area (9) of the strip (6) of the lateral static fixing jaw (5) is anti-slip.

3. The mechanical jaw edge gripper (1) according to claim 1, **characterized in that** the lateral static fixing jaw (5) and the strip (6) have the same length.

4. The mechanical jaw edge gripper (1) according to claim 1 or 2, **characterized in that** the length of the lateral static fixing jaw (5) and/or the strip (6) is 10 to 30 cm.

5. The mechanical jaw edge gripper (1) according to claim 1, **characterized in that** the upper movable pressure jaw (7) and the strip (8) have the same length.

6. The mechanical jaw edge gripper (1) according to claim 1 or 4, **characterized in that** the length of the upper movable pressure jaw (7) and/or the strip (8) is 10 to 30 cm.

7. The mechanical jaw edge gripper (1) according to claim 1, **characterized in that** the strip (6) of the lateral static fixing jaw (5) and the strip (8) of the upper movable pressure jaw (7) have the same length.

8. The mechanical jaw edge gripper (1) according to claim 1, **characterized in that** the contact area (9) of the strip (6) of the lateral static fixing jaw (5) is provided with projections or grooves.

9. The mechanical jaw edge gripper (1) according to claim 1, **characterized in that** the tilting edge (10) is horizontal throughout its length.

10. The mechanical jaw edge gripper (1) according to claim 1, **characterized in that** the tilting edge (10) is situated in the tilting block (14), which is steppedly mounted on the lateral static fixing jaw (5) behind the strip (6) and steppedly passes into the contact area (9).

11. The mechanical jaw edge gripper (1) according to claim 1, **characterized in that** the tilting edge (10) is formed by the edge of the contact area (9) of the strip (6) of the lateral static fixing jaw (5).
